# FASCICULE DE BREVET EUROPEEN

(11) **EP 2 930 862 B1**
(45) Date de publication et mention de la délivrance du brevet: **15.03.2017**
(21) Numéro de dépôt: 15162095.2
(22) Date de dépôt: 31.03.2015
(51) Int. Cl.: H04B 7/185, H04B 7/204

(54) **Système et procédé de télécommunication par satellite à couverture terrestre avec des pinceaux d'antenne multiples comportant des moyens de répartition de capacité variable entre les pinceaux d'antenne.**
Anordnung und Verfahren zur Kommunikation über einen Satelliten mit Erdüberdeckung durch mehreren Antennastrahlen mit Mitteln zur veränderlichen Kapazität Zuteilung zwischen den Strahlen.
Satellite communication system and method with multispot beam coverage having means for variable capacity allocation between the spot beams.

(30) Priorité: 11.04.2014 FR 1400883
(43) Date de publication de la demande: 14.10.2015
(73) Titulaire: THALES, 92400 Courbevoie (FR)
(72) Inventeur: Charrat, Bernard, 31037 Toulouse Cedex 1 (FR)
(74) Mandataire: Nguyen, Dominique

(56) Documents cités:
- WO-A1-2008/017699
- US-A1- 2011 189 947
- US-A1- 2012 164 941
- US-A1- 2013 009 809
- US-B1- 6 442 148

## Description

La présente invention concerne un système et un procédé de télécommunication par satellite à couverture multispots comprenant des moyens de répartition de capacité variable. Elle s'applique plus particulièrement au domaine des applications spatiales telles que les télécommunications par satellite pour des missions nécessitant une adaptation dynamique de la capacité attribuée à chaque spot.

Les systèmes de télécommunications par satellite à couverture multispots actuels ont généralement une capacité (bande de fréquence et puissance attribuées à chaque spot) qui est figée pour chaque spot et qui ne peut donc pas être modifiée après le lancement du satellite. En particulier, il n'est pas possible de réaffecter la capacité de trafic non utilisée d'un spot vers un autre spot au cours de la vie du satellite. La répartition fixe de la capacité est d'autant plus pénalisante que la durée de vie d'un satellite est très longue (de l'ordre de quinze ans) et il est donc difficile pour un opérateur, d'estimer les évolutions, au cours du temps, des besoins en capacité correspondant à chaque zone de la couverture. Ceci entraîne potentiellement des problèmes de surcapacité dans certaines zones et de sous-capacité dans d'autres zones de la couverture.

Il existe des systèmes de télécommunication, comme décrit par exemple dans le document US 6442148, qui comportent un mécanisme de flexibilité, mais ces systèmes utilisent soit des processeurs numériques soit des processeurs fonctionnant en bande de fréquence intermédiaire IF qui présentent les inconvénients d'être coûteux, complexes et limités en bande passante.

Un but de l'invention est de remédier aux inconvénients des systèmes de télécommunications par satellite à couverture multispots connus en introduisant de la flexibilité dans la répartition de capacité attribuée à chaque spot dans les missions à couverture multispots, avec un impact faible sur la capacité et le coût global du système, sans utiliser de processeur numérique ni de processeur IF.

Un autre but de l'invention est de permettre un déploiement progressif des stations d'ancrage (en anglais : Gateway), en permettant un fonctionnement à capacité réduite lors de la phase de lancement du système de télécommunication qui peut dès lors se faire avec un nombre réduit de stations d'ancrage déployées au sol.

Pour cela, l'invention concerne un système de télécommunication par satellite à couverture multispots et à répartition de capacité variable, comportant au moins une station d'ancrage terrestre, des utilisateurs localisés dans des cellules différentes régulièrement réparties dans une zone de couverture géographique terrestre, au moins un répéteur monté à bord d'un satellite et apte à relayer des signaux radiofréquence entre la station d'ancrage et les utilisateurs, le répéteur comportant une pluralité de canaux de réception connectés à au moins un dispositif d'élaboration des spots, chaque spot étant apte à couvrir une cellule utilisateur dédiée. Tous les canaux de réception ont une largeur de bande passante identique et le dispositif d'élaboration des spots comporte des amplificateurs de canaux à gain variable et à puissance de sortie constante aptes à égaliser les niveaux de puissance de tous les canaux de réception, les niveaux de puissance de sortie de tous les amplificateurs de canaux étant constants et identiques pour tous les canaux, des démultiplexeurs fréquentiels respectivement connectés en sortie des amplificateurs de canaux et destinés à scinder la bande passante attribuée à chaque canal en N sous-bandes de même largeur correspondant à N porteuses de fréquences différentes, au moins un dispositif de sélection et de répartition de toutes les porteuses entre tous les spots, deux porteuses adjacentes dans un canal de réception étant attribuées à deux spots différents, et des combineurs fréquentiels respectivement dédiés à chaque spot pour combiner les porteuses sélectionnées pour le spot correspondant, le nombre de porteuses attribué à chaque spot étant variable d'un spot à un autre spot en fonction des besoins des utilisateurs correspondants.

Avantageusement, le dispositif de sélection et de répartition des porteuses comporte des commutateurs à deux positions et des commutateurs à trois positions, les commutateurs reliant sélectivement, selon leur position, chaque porteuse à un combineur fréquentiel choisi parmi tous les combineurs fréquentiels.

Avantageusement, le système de télécommunication à couverture multispots et à répartition de capacité variable comporte en outre des convertisseurs de fréquence dédiés à chaque canal de réception et destinés à convertir des bandes de fréquence de réception dans des bandes de fréquence d'émission, les amplificateurs de canaux à gain variable et à puissance de sortie constante étant connectés en sortie des convertisseurs de fréquence.

Avantageusement, chaque spot comporte un nombre de porteuses dédié compris entre 0 et N inclus et le nombre moyen de porteuses par spot est prédéfini et inférieur à N.

Avantageusement, les spots peuvent être associés en plusieurs groupes différents. Dans ce cas, le dispositif d'élaboration des spots comporte plusieurs dispositifs indépendants de sélection et de répartition des porteuses, chaque dispositif de sélection et de répartition étant dédié à un groupe de spots.

Les groupes de spots différents peuvent comporter le même nombre de spots ou un nombre de spots différents.

Chaque groupe de spots peut comporter un même nombre moyen de porteuses par spot.

L'invention concerne aussi un procédé de télécommunication par satellite à couverture multispots et à répartition de capacité variable entre au moins une station d'ancrage terrestre et des utilisateurs localisés dans des cellules différentes régulièrement réparties dans une zone de couverture géographique terrestre, le procédé consistant à bord du satellite, à relayer des signaux radiofréquence reçus sur des canaux de réception, entre la station d'ancrage et les utilisateurs. Le procédé consiste à attribuer une même largeur de bande passante à chaque canal de réception, à égaliser les niveaux de puissance de tous les canaux de réception, à scinder la bande passante attribuée à chaque canal de réception en N sous-bandes de même largeur correspondant à N porteuses de fréquences différentes, à sélectionner et à répartir toutes les porteuses obtenues entre tous les spots, deux porteuses adjacentes dans un canal de réception étant attribuées à deux spots différents, et pour chaque spot, à combiner les porteuses sélectionnées correspondantes, le nombre de porteuses attribué à chaque spot étant variable d'un spot à un autre spot en fonction des besoins des utilisateurs correspondants.

Avantageusement, les spots peuvent être associés en plusieurs groupes différents, indépendants entre eux. Dans ce cas, les porteuses sont sélectionnées et réparties dans chaque groupe de spots, indépendamment des autres groupes de spots.

D'autres particularités et avantages de l'invention apparaîtront clairement dans la suite de la description donnée à titre d'exemple purement illustratif et non limitatif, en référence aux dessins schématiques annexés qui représentent :
- figure 1 : un schéma d'un exemple de répartition de la capacité d'un satellite de télécommunication dans une zone de couverture multispots, selon l'invention ;
- figure 2 : un schéma, illustrant un exemple d'attribution variable, de zéro à quatre porteuses, entre différents canaux, à puissance constante par porteuse, selon l'invention;
- figure 3 : un schéma d'un exemple d'architecture d'un système de télécommunication illustrant un premier exemple de dispositif d'élaboration des spots correspondant à une répartition de 12 porteuses entre quatre spots, selon l'invention ;
- figure 4 : un tableau illustrant l'ensemble des combinaisons possibles correspondant à une répartition de 12 porteuses entre quatre spots, selon l'invention ;
- figure 5 : un schéma illustrant un exemple d'architecture d'un système de télécommunication illustrant un deuxième exemple de dispositif d'élaboration des spots correspondant à une répartition de huit porteuses entre quatre spots, selon l'invention ;
- figure 6 : un tableau illustrant l'ensemble des combinaisons possibles correspondant à une répartition de huit porteuses entre quatre spots, selon l'invention ;
- figure 7 : un schéma illustrant un exemple d'architecture d'un système de télécommunication illustrant un troisième exemple de dispositif d'élaboration des spots correspondant à une répartition de six porteuses entre trois spots, selon l'invention.
- figure 8 : un tableau illustrant l'ensemble des combinaisons possibles correspondant à une répartition de six porteuses entre trois spots, selon l'invention ;
- figures 9a et 9b : deux exemples de sélection et de répartition des porteuses adapté à un déploiement progressif des stations d'ancrage terrestres, dans des cas correspondant au premier exemple de réalisation de l'invention ;
- figure 10: un exemple de sélection et de répartition des porteuses adapté à un déploiement progressif des stations d'ancrage terrestres, dans un cas correspondant au deuxième exemple de réalisation de l'invention ;
- figure 11 : un exemple de sélection et de répartition des porteuses adapté à un déploiement progressif des stations d'ancrage terrestres, dans un cas correspondant au troisième exemple de réalisation de l'invention.

La plateforme d'un satellite de télécommunication est dimensionnée pour délivrer une puissance électrique globale maximale qui est fournie par des panneaux solaires associés à des batteries. Plus la puissance à fournir est importante, plus les dimensions des panneaux solaires, des batteries, du satellite sont élevées et plus le coût du satellite et du lancement augmente. Cette puissance est définie et figée avant le lancement du satellite et ne peut plus être modifiée ensuite. De même, le dimensionnement de la charge utile montée à bord du satellite, notamment le nombre de canaux de communication destinés à relayer des signaux radiofréquence entre des stations d'ancrage terrestres et des utilisateurs situés dans une zone de couverture, est défini avant le lancement du satellite et non modifiable ensuite.

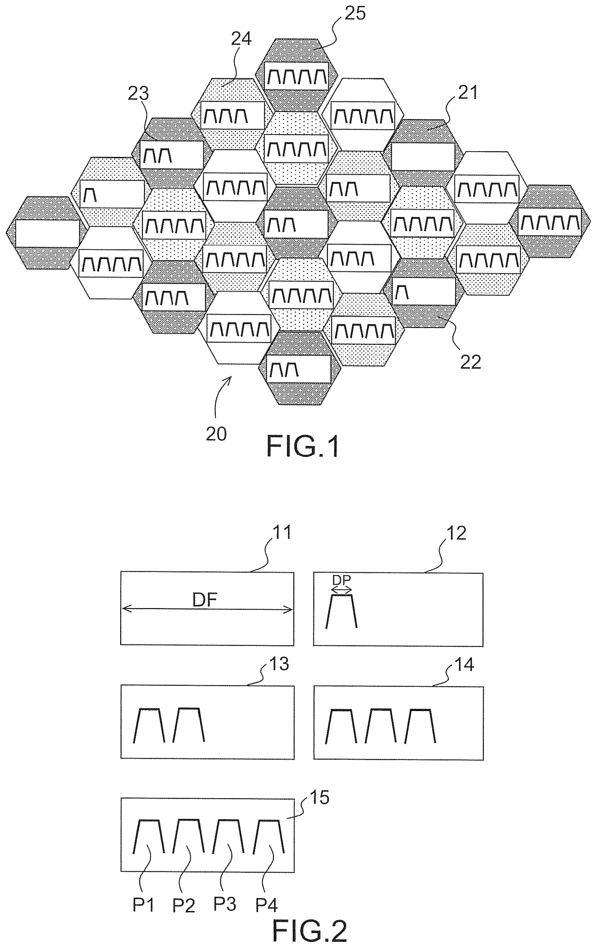

Le schéma représenté sur la figure 1 est un exemple de zone de couverture terrestre 20 divisée en plusieurs cellules 21, 22, 23, 24,..., régulièrement réparties dans la zone de couverture 20 et destinées à être illuminées par des spots respectifs élaborés dans un répéteur à bord du satellite. Les spots contiennent des signaux radiofréquence qui sont acheminés vers les utilisateurs localisés dans les différentes cellules par des canaux de communication dédiés du système de télécommunication. La bande de fréquence d'émission de chaque spot et la polarisation du signal radiofréquence attribuée à chaque spot sont définies selon un schéma classique dit à quatre couleurs, les couleurs différentes correspondant à des couples de bandes de fréquence et de polarisation de valeurs différentes, les spots de même couleur réutilisant les mêmes valeurs de fréquence et de polarisation. Généralement, tous les canaux ont une même largeur de bande passante et une même puissance donc une même capacité.

Pour introduire de la flexibilité de capacité aux différentes cellules de la zone de couverture illuminées par les différents spots, l'invention consiste à attribuer à chaque canal dédié à un spot la même largeur de bande passante DF et la même densité de puissance, mais à scinder la bande passante DF en N porteuses différentes P1, P2, P3,...PN, de même largeur de bande DP, où DP=DF/N, correspondant à des fréquences différentes, et à faire varier le nombre de porteuses attribué d'un spot à un autre spot selon les besoins en capacité des clients servis par les spots correspondants. Pour que les porteuses ne se perturbent pas, entre des spots de même couleur, le même niveau de puissance et donc la même largeur de bande passante DP doit être attribuée à chaque porteuse. Contrairement aux systèmes existants utilisant des processeurs numériques, ce sont les porteuses qui sont attribuées à chaque spot en choisissant leur nombre mais pas leur fréquence dans la bande du spot.

Par exemple, sur la figure 2, la bande passante DF est scindée en quatre porteuses différentes P1, P2, P3, P4 de même largeur de bande passante DP. Chaque spot est alimenté par différentes porteuses distribuées par des sous-canaux, et à chaque porteuse est attribué un quart de la puissance maximale, la puissance maximale correspondant à quatre porteuses. Ainsi, lorsqu'une puissance de 100W est attribuée à la bande passante DF, la puissance attribuée à chaque porteuse est égale à 25W. Le nombre de porteuses attribué à chaque spot peut prendre différentes valeurs pour des spots différents. Sur l'exemple de la figure 2, le canal 11 dédié à un premier spot comporte zéro porteuse, c'est-à-dire qu'aucune puissance n'est attribuée à ce premier spot. Ce premier spot est destiné à couvrir une cellule 21 de la couverture où il n'y a pas de clients, par exemple une cellule dans laquelle le service n'est pas encore proposé. Le deuxième canal 12 dédié à un deuxième spot destiné à couvrir la cellule 22 comporte une seule porteuse et il lui est donc attribué une puissance de 25W. Le troisième canal 13 dédié à un troisième spot destiné à couvrir la cellule 23 et le quatrième canal 14 dédié à un quatrième spot destiné à couvrir la cellule 24 comportent respectivement deux et trois porteuses, ce qui correspond à des puissances respectives de 50W et de 75W. Le dernier canal 15 dédié à un cinquième spot 25 comporte quatre porteuses et une puissance de 100W. Le nombre maximal N de porteuses par spot est choisi en fonction de la granularité de capacité que l'opérateur souhaite attribuer aux différents spots servant les différentes cellules de la zone de couverture.

Selon les besoins des clients identifiés par l'opérateur, le coût et la capacité souhaités par l'opérateur, la bande passante DF attribuée à chaque canal est donc scindée en N sous-bandes contigües différentes de même largeur DP correspondant à N porteuses différentes, où N est un nombre entier supérieur à un, et un nombre moyen K de porteuses par spot est choisi, où K est un nombre entier inférieur à N, le nombre moyen de porteuses par spot multiplié par le nombre total de spots correspondant à la capacité maximale du système de télécommunication. L'invention consiste alors à définir un dispositif de sélection et de répartition des porteuses entre les spots permettant d'égaliser les puissances des porteuses puis de répartir les différentes porteuses entre les spots en fonction des besoins en capacité de chaque cellule de la zone de couverture. Cela permet d'activer chaque spot avec une bande passante et une puissance spécifiques à chaque spot et appropriées aux besoins réels des clients situés dans chaque cellule et de limiter le coût du système en limitant la capacité non utilisée.

Sur les schémas des figures 1 et 2, la bande passante DF attribuée à chaque canal 11, 12, 13, 14, 15 est scindée en quatre sous-bandes différentes correspondant à quatre porteuses différentes P1, P2, P3, P4 occupant chacune un quart de la bande passante et la répartition des porteuses est en moyenne de trois porteuses par spot. Ainsi, il est possible de moduler la capacité attribuée à chacun des spots auxquels peut être attribué zéro porteuse ou une porteuse ou deux porteuses ou trois porteuses ou quatre porteuses selon les besoins des cellules correspondantes de la couverture. Dans cet exemple, le nombre moyen de porteuses par spot est choisi égal à trois, la capacité en bande passante de chaque spot est donc en moyenne utilisée aux trois quart et un quart de la capacité totale en bande passante reste disponible et accessible pour un deuxième satellite qui peut être lancé ultérieurement pour augmenter la capacité totale du système si les besoins évoluent. Dans cet exemple, la configuration initiale du système de télécommunication lors du lancement du satellite ne nécessite donc pas de fournir une puissance correspondant à quatre porteuses pour chaque spot mais permet toutefois de fournir quatre porteuses dans les spots fortement utilisés, ce qui permet de limiter la capacité non utilisée.

En cas de changement des besoins en capacité dans plusieurs cellules de la couverture, la répartition des porteuses n'est pas figée mais peut être dynamiquement adaptée tout au long de la vie du satellite pour augmenter la capacité de certaines cellules et diminuer la capacité d'autres cellules, le nombre moyen de porteuses par spot, et donc le nombre total de porteuses à répartir, restant constant.

Dans le cas où la capacité en puissance totale devient insuffisante pour couvrir tous les besoins des utilisateurs de la zone de couverture, il est alors possible d'augmenter la capacité totale du système de télécommunication en lançant un deuxième satellite de télécommunication et en attribuant des porteuses additionnelles aux cellules de la couverture dont la capacité en puissance doit être augmentée.

De même, à l'initialisation du service, le système selon l'invention peut fonctionner avec un nombre de porteuses réduit mais réparti sur l'ensemble des spots ce qui permet au système de pouvoir fonctionner avec un nombre réduit de stations d'ancrage pour servir toutes les cellules utilisateurs. Après la phase de démarrage du système, si les besoins des clients se confirment, des connexions supplémentaires peuvent être ajoutées au système pour permettre un fonctionnement avec en moyenne K porteuses par spot.

Le choix du nombre total de spots, du nombre N de porteuses différentes dans la bande passante de chaque spot et du nombre moyen K de porteuses par spot est fixé initialement et ne peut plus être modifié après le lancement du satellite.

Bien entendu, le nombre N de porteuses différentes peut être choisi différent de quatre et le nombre moyen K de porteuses par spot peut être choisi différent de trois. Lorsque le nombre N de porteuses dans la bande passante augmente, la granularité de la capacité offerte pour chaque spot s'accroît, ce qui permet une meilleure répartition de la capacité, mais plus le nombre N de porteuses dans la bande passante augmente, plus la complexité, le coût et la masse de l'architecture de la charge utile augmente.

Un autre paramètre important de l'invention est que la répartition de la capacité est réalisée en considérant les spots par groupes de plusieurs spots, chaque groupe pouvant comporter le même nombre C de spots ou un nombre différent, où C est inférieur ou égal au nombre total de spots à réaliser. Ainsi dans un groupe de C spots, K x C porteuses sont à répartir entre les C spots, en fonction des besoins définis par l'utilisateur, avec pour chaque spot entre 0 et N porteuses. Plus C est élevé plus l'utilisateur a une grande liberté dans la répartition de la capacité mais plus la complexité et donc le coût augmente. Il est à noter qu'au maximum, lorsque le système de télécommunication doit fonctionner dans deux bandes de fréquence de réception différentes Fr1, Fr2, la taille maximale d'un groupe de spots est égale à la moitié du nombre total de spots car la répartition de capacité se fait entre des spots utilisant la même bande de fréquence.

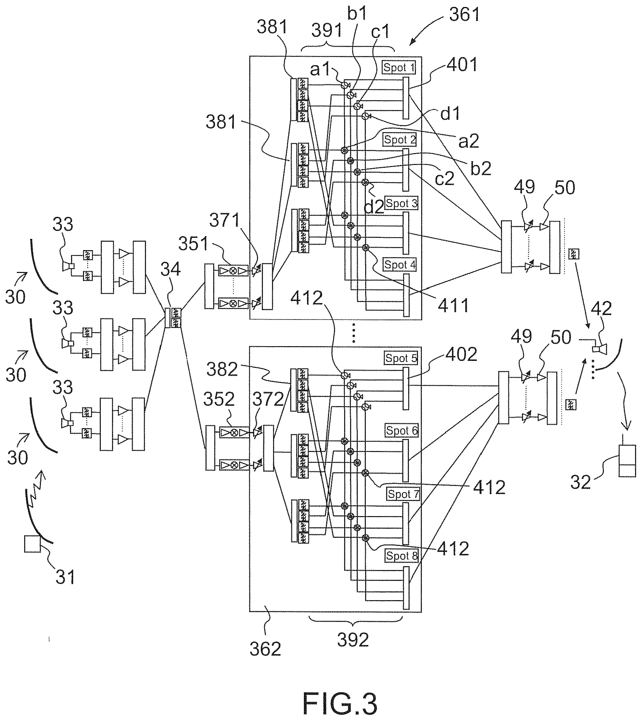

La figure 3 est un schéma illustrant un exemple d'architecture d'un système de télécommunication par satellite correspondant à une mission de service comportant des liens de communication entre un répéteur monté à bord du satellite et plusieurs stations d'ancrage différentes pour servir des spots utilisateurs. Toutes les stations d'ancrage fonctionnent dans les mêmes bandes de fréquence. Sur ce schéma, seule la section aller du répéteur est représentée, ce qui correspond à l'acheminement des signaux provenant des stations d'ancrage vers les différentes cellules utilisateurs. Cet exemple concerne le cas où le nombre de porteuses N par bande passante DF est choisi égal à quatre, le nombre moyen K de porteuses par spot est choisi égal à trois et la taille C du groupe de spots dans lequel s'applique la répartition de capacité est égale à quatre pour tous les groupes: N=4, K=3, C=4.

Comme représenté sur la figure 3, à bord du satellite, le répéteur comporte une ou plusieurs antennes d'émission et de réception 30 aptes à relayer des signaux radiofréquence entre une ou plusieurs stations d'ancrage 31 et des utilisateurs 32. Chaque antenne 30 peut de manière connue, comporter un réflecteur et des sources 33 d'émission et de réception. Chaque station d'ancrage fonctionne dans deux bandes de fréquence, Fr1, Fr2 respectivement haute et basse et dans deux polarisations différentes POL1, POL2. Pour chaque station d'ancrage, deux signaux distincts correspondant aux deux polarisations différentes sont reçus par une source de réception dédiée 33, filtrés, puis amplifiés par des amplificateurs à faible bruit. Chacune des bandes de fréquence haute et basse reçues des différentes stations d'ancrage sont ensuite divisées en deux bandes distinctes dans des diplexeurs 34 pour obtenir quatre signaux distincts (POL1 Fr1, POL2 Fr1, POL1 Fr2, POL2 Fr2) par station d'ancrage. Pour chaque station, il y a un diplexeur par polarisation donc deux diplexeurs différents. Par exemple, pour un système de télécommunication comportant six stations d'ancrage opérationnelles, il y a douze diplexeurs et 24 canaux de réception différents sont obtenus en sortie des douze diplexeurs 34, parmi lesquels 12 canaux correspondent à la bande de fréquence haute Fr1 et 12 canaux correspondent à la bande de fréquence basse Fr2. Si la bande passante correspondant à chaque bande de fréquence de réception, respectivement haute et basse, est de 500 MHz, à chaque canal est attribuée une bande passante DF égale à 500MHz.

Les 24 canaux de 500MHz correspondant aux deux bandes de fréquence de réception, respectivement haute Fr1 et basse Fr2, sont respectivement connectés à 24 convertisseurs de fréquence 351, 352 destinés à convertir les deux bandes de réception Fr1, Fr2 dans les deux bandes de fréquence d'émission correspondantes F1 et F2, correspondant aux fréquences des spots utilisateurs.

Selon l'invention, après conversion de fréquence, les 24 canaux sont connectés en entrée d'au moins un dispositif d'élaboration des spots 361, 362. Comme les 24 canaux ne sont pas tous alimentés par la même station d'ancrage, leur niveau de puissance n'est pas homogène d'un canal à un autre canal et peut évoluer selon les conditions atmosphériques. Pour résoudre ce problème, selon l'invention, le dispositif d'élaboration des spots 361, 362 comporte des amplificateurs de canaux 371, 372 à gain variable, respectivement dédiés à chaque canal et destinés à égaliser les niveaux de puissance de tous les canaux avant d'élaborer les spots. Les amplificateurs de canaux 371, 372 à gain variable sont respectivement connectés en sortie des convertisseurs de fréquence 351, 352 et chaque amplificateur de canal 371, 372 a un gain commandé de façon à maintenir une puissance de sortie constante prédéterminée et identique pour tous les amplificateurs de canaux 371, 372 quel que soit leur niveau de puissance d'entrée. En sortie des amplificateurs de canaux 371, 372, le dispositif d'élaboration des spots 361, 362 comporte des démultiplexeurs fréquentiels 381, 382 assurant la division de la bande passante DF dédiée à chaque canal en N sous-bandes distinctes de même largeur de bande passante DP correspondant à N porteuses différentes, et au moins un dispositif 391, 392 de sélection et de répartition des porteuses entre les spots. Un combineur fréquentiel 401, 402 est dédié à chaque spot, chaque combineur fréquentiel 401, 402 assurant la combinaison des porteuses sélectionnées et distribuées sur ses entrées pour élaborer un spot correspondant sur sa sortie. Comme dans l'exemple représenté sur la figure 3, chaque bande passante DF attribuée à un canal peut être découpée en quatre porteuses différentes de même largeur de bande passante DP, les différentes porteuses étant distribuées par des sous-canaux. Par exemple DP peut être égale à 125MHz, mais l'invention n'est pas limitée à cet exemple de réalisation et le nombre N de porteuses peut être différent de quatre et par exemple égal à deux, ou à trois, ou à cinq, ou à toute autre valeur supérieure à un.

Selon l'invention, le dispositif 391, 392 de sélection et de répartition des porteuses entre les spots comporte un ensemble de commutateurs 411, 412 à deux ou trois positions différentes, reliant sélectivement, en fonction de leur position, toutes les porteuses délivrées en sortie des démultiplexeurs fréquentiels 381, 382 aux combineurs fréquentiels 40 destinés à élaborer chaque spot. Les commutateurs 411, 412 peuvent par exemple être des commutateurs rotatifs électromécaniques et être réalisés en technologie coaxiale de basse puissance ou des commutateurs à ferrite ou des commutateurs électroniques. En cas de changement des besoins concernant la répartition de la capacité entre les différents spots, les positions des commutateurs 411, 412 peuvent être modifiées par télécommande durant la vie du satellite. Les différentes porteuses sélectionnées et distribuées aux différents combineurs fréquentiels 401, 402 par les commutateurs 411, 412 sont recombinées par chaque combineur fréquentiel 401, 402 pour former des faisceaux correspondant aux différents spots. Les différents faisceaux formés en sortie de chaque combineur fréquentiel 401, 402 sont ensuite amplifiés par des préamplificateurs 49 et des amplificateurs de puissance 50, puis filtrés, puis les spots sont émis vers les utilisateurs 32 par des sources d'émission 42 d'une antenne multispots.

Selon l'invention l'opérateur peut affecter à chaque spot un nombre de porteuses compris entre 0 et N mais doit respecter la limite de la distribution au sein d'un groupe de C spots, cette limite étant égale à K x C porteuses, K étant le nombre moyen de porteuses par spot. Selon l'invention, il peut aussi être prévu de minimiser la perte de bande passante utile, due à la nécessité de prévoir une bande de garde entre les différentes porteuses, en assurant une répartition des porteuses garantissant l'absence d'effet des « multi-trajets ». Pour cela, deux porteuses adjacentes dans un même canal de réception ne peuvent pas être affectées au même spot.
Dans l'exemple de la figure 3, il est donc possible de répartir les 48 porteuses de la bande de fréquence F1 entre 16 spots différents comportant en moyenne trois porteuses par spot, et de répartir de la même façon les 48 porteuses de la bande de fréquence F2 entre 16 autres spots différents. La répartition des porteuses est réalisée en considérant les spots par groupes dont la taille peut par exemple être de 4 spots comme sur la figure 3 mais peut également être étendue à 8, ou 16 spots en accroissant la complexité de la fonction de répartition des porteuses respectivement réalisée par les dispositifs 391, 392 de sélection et de répartition des porteuses. Sur le schéma simplifié de la figure 3, la répartition des porteuses est représentée pour deux groupes de quatre spots, mais pour obtenir 32 spots, il faut huit groupes de quatre spots différents. Par conséquent, il est bien entendu qu'il faut ajouter six autres dispositifs 391, 392 de sélection et de répartition des porteuses pour alimenter respectivement les six autres groupes de quatre spots. Les différents groupes de spots peuvent comporter le même nombre de spots, mais ce n'est pas obligatoire. Chaque groupe de spots est indépendant des autres groupes et le système de télécommunication peut comporter des groupes de quatre spots et un groupe de seize spots par exemple, pour une mission comportant vingt spots. Par ailleurs, dans différents groupes de spots il peut y avoir un même nombre moyen de porteuses par spot ou des nombres moyens de porteuses différents. Par exemple, il peut y avoir des groupes comportant en moyenne trois porteuses par spot et des groupes comportant en moyenne deux porteuses par spot.

Plus la taille du groupe de spots considéré comporte un grand nombre de spots, plus la flexibilité du système de télécommunication augmente mais plus le nombre de commutateurs et de combinaisons possibles augmente et donc plus la complexité du système correspondant augmente. La solution retenue pour le dispositif d'élaboration des spots résulte donc d'un compromis entre le niveau de flexibilité souhaité et le niveau de complexité qui en découle.

Sur l'exemple de la figure 3, la répartition des différentes porteuses entre les spots, est réalisée en associant les canaux 351, 352 par groupe de trois qui permettent de former quatre spots différents, chaque groupe de quatre spots respectant la moyenne de trois porteuses par spot. Dans ce cas, les quatre porteuses de chaque groupe de trois canaux sont réparties sur les entrées de quatre combineurs fréquentiels 401, 402 différents pour former quatre spots différents de 0, 1, 2 ou 3 porteuses selon les spots avec une moyenne de 3 porteuses par spot dans chaque groupe de quatre spots. Ainsi, selon ce mode de réalisation de l'invention, la répartition des porteuses entre les spots est réalisée en parallèle pour huit groupes de quatre spots, par huit dispositifs de sélection et de répartition 391, 392 indépendants, dont deux d'entre eux correspondant respectivement aux fréquences F1 et F2 sont représentées sur la figure 3. On appelle dispositif de sélection et de répartition 391, 392, l'ensemble des commutateurs 411, 412 et des connexions associées participant à la répartition des porteuses pour l'élaboration d'un groupe de spots.

Un ou plusieurs commutateurs 411, 412 sont reliés entre chaque sortie d'un démultiplexeur fréquentiel 381, 382 et chaque entrée d'un combineur fréquentiel 401, 402 du dispositif d'élaboration des spots 361, 362. Chaque commutateur 411, 412 comporte un accès d'entrée et deux ou trois accès de sortie possibles. A titre d'exemple, sur la figure 3, l'agencement des connexions montre que les quatre sorties de chaque démultiplexeur fréquentiel 381, 382 sont connectées à une entrée d'un commutateur rotatif 411, 412 respectif et que les quatre entrées de chaque combineur fréquentiel 401, 402 sont connectées à une sortie d'un commutateur rotatif 411, 412. Les sorties d'un commutateur 411, 412 peuvent être directement reliées à un combineur fréquentiel 401, 402 ou par l'intermédiaire d'un deuxième commutateur. Les différentes porteuses qui alimentent chaque spot sont sélectionnées et attribuées par les commutateurs 411, 412 selon leur position.

Pour diminuer la largeur des bandes de garde entre deux bandes de fréquence adjacentes, selon l'invention, deux bandes de fréquence adjacentes issues d'un même démultiplexeur fréquentiel 381, 382 et provenant donc d'un même canal de réception, ne peuvent pas être attribuées à un même spot. Par conséquent, seules deux sorties non contigües d'un même démultiplexeur fréquentiel, correspondant à deux porteuses non adjacentes, peuvent être reliées à un même combineur fréquentiel. La ou les éventuelles porteuses additionnelles qui peuvent être attribuées à ce même spot doivent provenir d'un autre démultiplexeur fréquentiel associé au même groupe de spots. Par exemple, sur la figure 3, chaque commutateur 411, 412 comporte deux sorties possibles respectivement connectées, soit directement, soit par l'intermédiaire d'un autre commutateur, à deux combineurs fréquentiels différents pour l'élaboration de deux spots différents d'un groupe de quatre spots. Selon sa position, chaque commutateur 411, 412 peut connecter son entrée avec sa première ou sa deuxième sortie, ce qui permet de sélectionner et d'attribuer les porteuses aux quatre spots du groupe selon les besoins en capacité. Ainsi, par exemple, sur la figure 3, les commutateurs 411 a1 et c1 dont les entrées sont respectivement connectées à deux sorties non contigües du premier démultiplexeur fréquentiel 381, ont une première sortie connectée directement au combineur fréquentiel dédié à l'élaboration du spot 1 et une deuxième sortie connectée au combineur fréquentiel dédié à l'élaboration du spot 2 par l'intermédiaire d'un autre commutateur 411 respectif a2, c2. Les commutateurs 411 b1 et d1 dont les entrées sont respectivement connectées à deux sorties non contigües du deuxième démultiplexeur fréquentiel, ont une première sortie connectée directement au combineur fréquentiel dédié au spot 1 et une deuxième sortie reliée au combineur fréquentiel dédié au spot 2 par l'intermédiaire d'un autre commutateur respectif 411 b2, d2. Le quatrième spot est alimenté par les porteuses qui n'ont pas été attribuées aux trois autres spots du même groupe et peut comporter 0, 1, 2 ou 3 porteuses selon les positions retenues pour chaque commutateur 411 relié en sortie de chaque démultiplexeur fréquentiel 381 associé au groupe de spots concerné. Pour chaque groupe de quatre spots, le même schéma de connexion peut être reproduit entre les sorties des démultiplexeurs fréquentiel et les combineurs fréquentiels dédiés à chaque spot, en utilisant la même répartition des porteuses. Pour chaque groupe de quatre spots, les différents commutateurs permettent donc, selon leur position, qui peut être modifiée par des télécommandes, d'assurer toutes les répartitions possibles des 12 porteuses disponibles entre les quatre spots du groupe correspondant. Dans le cas où les groupes de spots n'ont pas tous la même taille et/ou pas tous le même nombre moyen de porteuses par spot, les dispositifs de sélection et de répartition dédiés à des groupes ayant un nombre de spots différent et/ou un nombre moyen de porteuses par spot différent, sont différents.

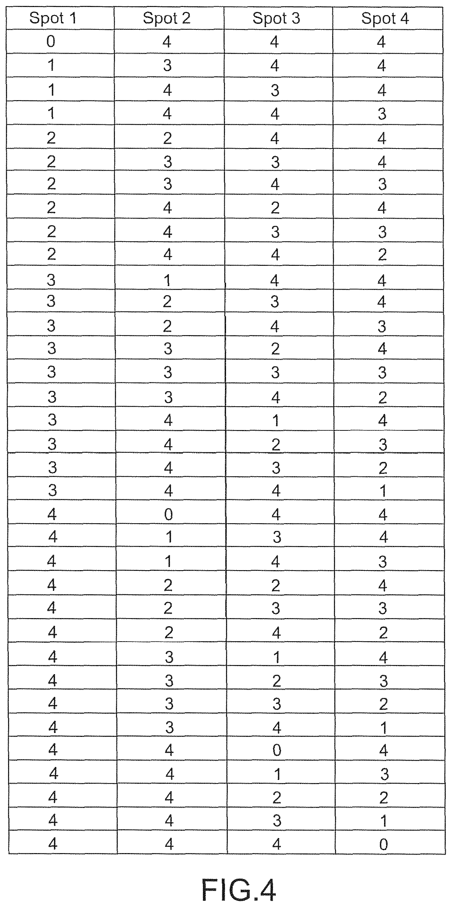

Un tableau illustrant un exemple des répartitions possibles du nombre de porteuses entre les spots est représenté sur la figure 4, pour un groupe de quatre spots, une bande passante DF par canal scindée en un nombre N égal à quatre porteuses et une répartition moyenne K égale à trois porteuses par spot. Sur la première ligne du tableau, le spot 1 ne comporte pas de porteuse, les spots 2, 3 et 4 comportent chacun quatre porteuses. Cette première répartition possible correspond aux connexions représentées explicitement sur la figure 3. Les autres répartitions possibles représentées sur les autres lignes du tableau de la figure 4 peuvent être réalisées en modifiant la position des commutateurs 411, 412 du dispositif de sélection et de répartition 391, 392.

Chaque dispositif de sélection et de répartition 391, 392 fonctionne soit dans la bande de fréquence basse F1 soit dans la bande de fréquence haute F2. Pour un fonctionnement du système de télécommunication dans deux bandes de fréquences différentes haute et basse, il faut donc au minimum deux groupes de spots et deux dispositifs de sélection et de répartition 391, 392 indépendants, chaque dispositif de sélection et de répartition 391, 392 étant dédié à une bande de fréquence. C'est au niveau de l'antenne multispots que le choix de la polarisation est réalisé et que l'émission des spots selon un schéma à quatre couleurs est effectué.

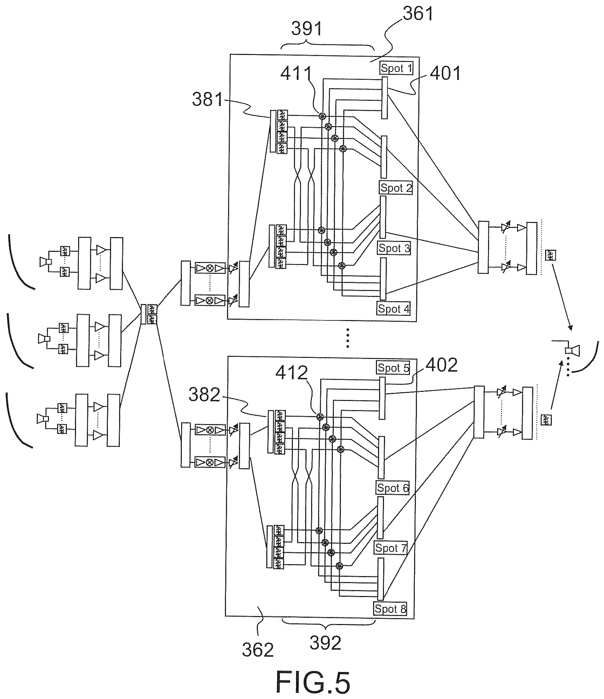

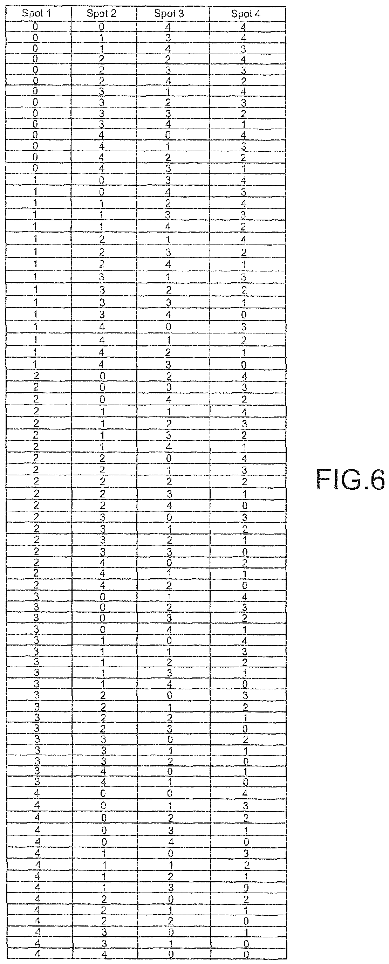

La figure 5 illustre un deuxième exemple d'architecture comportant un dispositif d'élaboration des spots 361 dans lequel les spots sont considérés par groupes de quatre spots formés à partir de deux démultiplexeurs fréquentiels différents 381 délivrant chacun quatre porteuses différentes. La répartition des huit porteuses entre les quatre spots correspond à un choix d'une moyenne de deux porteuses par spot (N=4, K=2, C=4). Quatre combineurs différents 401 sont respectivement dédiés à la formation des quatre spots. Dans cet exemple, chaque commutateur 411 relié en sortie d'un démultiplexeur fréquentiel 381 comporte trois positions. Deux positions sont respectivement reliées à deux combineurs fréquentiels 401 choisis parmi les quatre combineurs différents, et la troisième position est reliée à un autre commutateur à trois positions dont deux positions sont connectées aux deux autres combineurs fréquentiels. Ainsi les huit porteuses délivrées en sortie des deux démultiplexeurs fréquentiels du dispositif de sélection et de répartition 391 sont sélectionnées pour alimenter les spots 1 à 4. Toutes les répartitions possibles des huit porteuses entre les quatre spots avec une moyenne de deux porteuses par spot sont représentées dans le tableau de la figure 6.

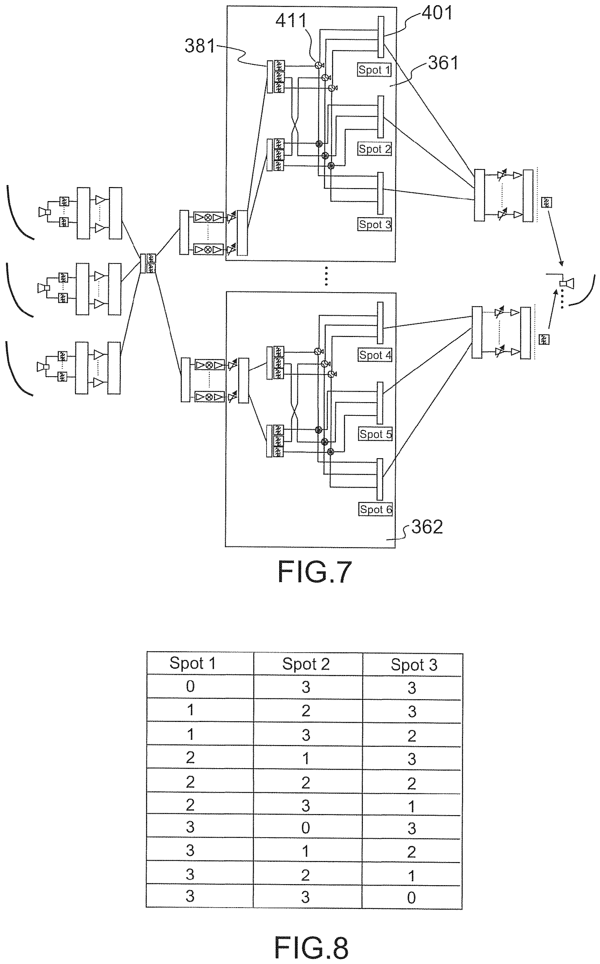

La figure 7 illustre un troisième exemple d'architecture comportant un dispositif d'élaboration des spots 361 dans lequel les spots sont considérés par groupes de trois spots formés à partir de deux démultiplexeurs fréquentiels 381 différents délivrant chacun trois porteuses différentes. La répartition des six porteuses entre les trois spots correspond à un choix d'une moyenne de deux porteuses par spot (N=3, K=2, C=3). Trois combineurs fréquentiels 401 différents sont respectivement dédiés à la formation des trois spots. Dans cet exemple, chaque commutateur 411 relié en sortie d'un démultiplexeur fréquentiel comporte deux ou trois positions. Les commutateurs à deux positions ont une position connectée à un premier combineur fréquentiel choisi parmi les trois combineurs différents et une position reliée à un commutateur à trois positions dont deux positions sont connectées aux deux autres combineurs fréquentiels. Ainsi les six porteuses délivrées en sortie des deux démultiplexeurs fréquentiels de la matrice de répartition sont sélectionnées pour alimenter les spots 1 à 3. Toutes les répartitions possibles des six porteuses entre les trois spots avec une moyenne de deux porteuses par spot sont représentées dans le tableau de la figure 8.

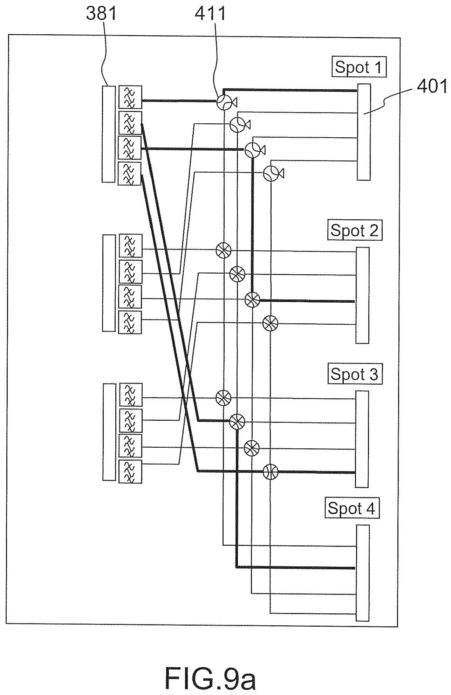

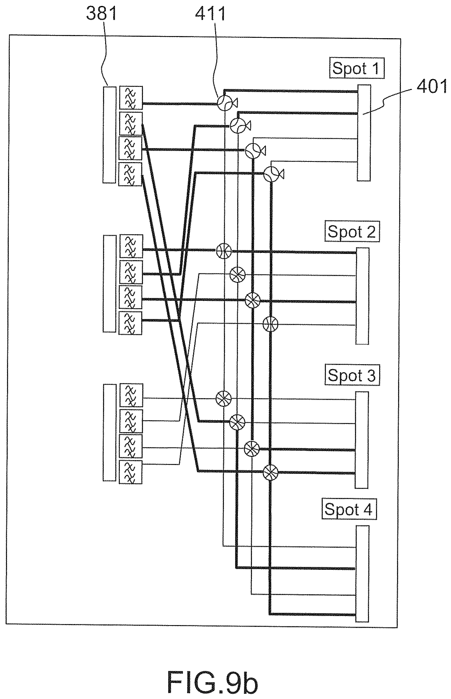

Les figures 9a, 9b, 10, 11 illustrent quatre exemples de dispositif de sélection et de répartition 391 des porteuses adaptés à un déploiement progressif des stations d'ancrage terrestres. Lors de la phase de lancement du système de télécommunication, l'opérateur peut souhaiter démarrer avec un petit nombre de stations d'ancrage déployées au sol et avec une capacité réduite, tout en gardant la possibilité d'augmenter le nombre de stations et la capacité ultérieurement. Les figures 9a et 9b illustrent deux exemples correspondant au schéma de la figure 3, dans une phase de démarrage selon laquelle le nombre de stations d'ancrage est réduit de deux tiers pour la figure 9a et de un tiers pour la figure 9b. Sur ces deux figures 9a et 9b, les sous-canaux opérationnels et alimentés par une porteuse délivrée en sortie d'un démultiplexeur sont représentés en trait épaissi et les canaux représentés en traits fins ne sont pas alimentés mais sont disponibles si les besoins du système de télécommunication augmentent et que l'on souhaite ajouter des stations d'ancrage additionnelles. Dans ces deux exemples, N=4, K=3, C=4 et la répartition de la capacité disponible est homogène, mais il est également possible de réaliser des configurations de répartition hétérogènes de cette capacité réduite. Sur la figure 9a, le dispositif de sélection et de répartition 391 est identique à celui représenté sur la figure 3, mais seul le premier démultiplexeur 381 est alimenté par un signal de réception et délivre quatre porteuses sur ses quatre sorties. Chaque porteuse est alors attribuée à l'un des quatre spots selon la position des commutateurs 11 connectés entre les sorties du démultiplexeur et les entrées des quatre combineurs fréquentiels 401 destinés à élaborer les quatre spots. Sur la figure 9b, le dispositif de sélection et de répartition 391 est identique à celui représenté sur la figure 3, mais seuls les premier et deuxième démultiplexeurs sont alimentés par un signal de réception et délivrent quatre porteuses sur leurs quatre sorties respectives. Chaque porteuse délivrée par les deux démultiplexeurs opérationnels est alors attribuée à l'un des quatre spots selon la position des commutateurs connectés entre les sorties des démultiplexeurs respectifs et les entrées des quatre combineurs fréquentiels destinés à élaborer les quatre spots.

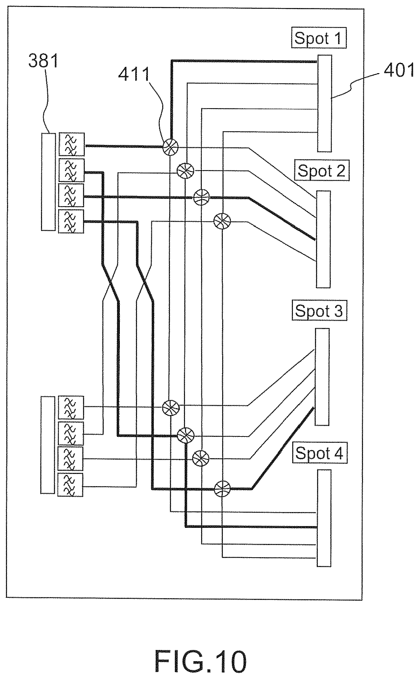

La figure 10 illustre un exemple correspondant au schéma de la figure 5, dans une phase de démarrage selon laquelle le nombre de stations d'ancrage est réduit de moitié. Dans cet exemple, N=4, K=2, C=4 et la répartition de la capacité disponible est homogène, mais il est également possible de réaliser des configurations de répartition hétérogène de cette capacité réduite. Le dispositif de sélection et de répartition 391 correspondant est identique à celui représenté sur la figure 5, mais seul le premier démultiplexeur 381 est alimenté par un signal de réception et délivre quatre porteuses sur ses quatre sorties. Chaque porteuse est alors attribuée à l'un des quatre spots selon la position des commutateurs 411 connectés entre les sorties du démultiplexeur et les entrées des quatre combineurs fréquentiels destinés à élaborer les quatre spots.

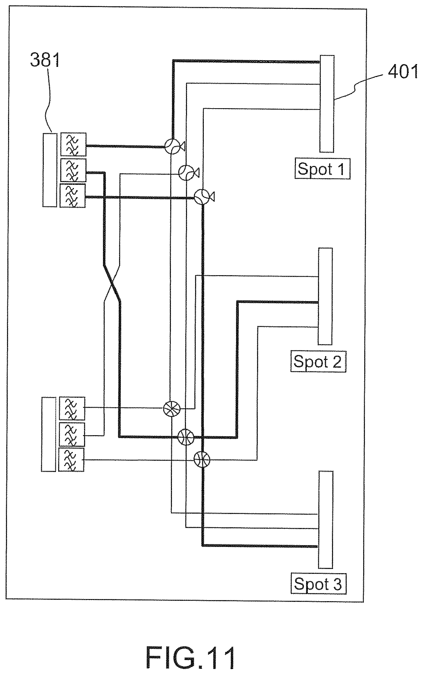

La figure 11 illustre un exemple correspondant au schéma de la figure 7, dans une phase de démarrage selon laquelle le nombre de stations d'ancrage est réduit de moitié. Dans cet exemple, N=3, K=2, C=3 et la répartition de la capacité disponible est homogène, mais il est également possible de réaliser des configurations de répartition hétérogène de cette capacité réduite. Le dispositif de sélection et de répartition 391 est identique à celui représentée sur la figure 7, mais seul le premier démultiplexeur est alimenté par un signal de réception et délivre trois porteuses sur ses trois sorties. Chaque porteuse est alors attribuée à l'un des trois spots selon la position des commutateurs connectés entre les sorties du démultiplexeur et les entrées des trois combineurs fréquentiels destinés à élaborer les trois spots.

Bien que l'invention ait été décrite en liaison avec des modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Système de télécommunication par satellite à couverture multispots et à répartition de capacité variable, comportant au moins une station d'ancrage terrestre (30), des utilisateurs (32) localisés dans des cellules différentes régulièrement réparties dans une zone de couverture géographique terrestre, au moins un répéteur monté à bord d'un satellite et apte à relayer des signaux radiofréquence entre la station d'ancrage et les utilisateurs, le répéteur comportant une pluralité de canaux de réception connectés à au moins un dispositif d'élaboration des spots (361, 362), tous les canaux de réception ayant une largeur de bande passante identique, chaque spot étant apte à couvrir une cellule utilisateur dédiée, **caractérisé en ce que** le dispositif d'élaboration des spots (361, 362) comporte des amplificateurs de canaux (371, 372) à gain variable et à puissance de sortie constante aptes à égaliser les niveaux de puissance de tous les canaux de réception, les niveaux de puissance de sortie de tous les amplificateurs de canaux étant constants et identiques pour tous les canaux, des démultiplexeurs fréquentiels (381, 382) respectivement connectés en sortie des amplificateurs de canaux (371, 372) et destinés à scinder la bande passante attribuée à chaque canal de réception en N sous-bandes de même largeur correspondant à N porteuses différentes, au moins un dispositif (391, 392) de sélection et de répartition de toutes les porteuses entre tous les spots, deux porteuses adjacentes dans un canal de réception étant attribuées à deux spots différents, et des combineurs fréquentiels (401, 402) respectivement dédiés à chaque spot pour combiner les porteuses sélectionnées pour le spot correspondant, le nombre de porteuses attribué à chaque spot étant variable d'un spot à un autre spot en fonction des besoins des utilisateurs (32) correspondants.

2. Système de télécommunication à couverture multispots et à répartition de capacité variable selon la revendication 1, **caractérisé en ce que** le dispositif (391, 392) de sélection et de répartition des porteuses comporte des commutateurs à deux positions et des commutateurs à trois positions, les commutateurs (411, 412) reliant sélectivement, selon leur position, chaque porteuse à un combineur fréquentiel (401, 402) choisi parmi tous les combineurs fréquentiels.

3. Système de télécommunication à couverture multispots et à répartition de capacité variable selon l'une des revendications 1 ou 2, **caractérisé en ce qu'**il comporte en outre des convertisseurs de fréquence (351, 352) dédiés à chaque canal de réception et destinés à convertir des bandes de fréquence de réception dans des bandes de fréquence d'émission, les amplificateurs de canaux à gain variable et à puissance de sortie constante étant connectés en sortie des convertisseurs de fréquence (351, 352).

4. Système de télécommunication à couverture multispots et à répartition de capacité variable selon l'une des revendications 1 ou 2, **caractérisé en ce que** chaque spot comporte un nombre de porteuses dédié compris entre 0 et N inclus et **en ce que** le nombre moyen de porteuses par spot est prédéfini et inférieur à N.

5. Système de télécommunication à couverture multispots et à répartition de capacité variable selon la revendication 1, **caractérisé en ce que** les spots sont associés en plusieurs groupes différents, et **en ce que** le dispositif d'élaboration des spots comporte plusieurs dispositifs indépendants de sélection et de répartition des porteuses, chaque dispositif de sélection et de répartition étant dédié à un groupe de spots.

6. Système de télécommunication à couverture multispots et à répartition de capacité variable selon la revendication 5, **caractérisé en ce que** les groupes de spots différents comportent le même nombre de spots.

7. Système de télécommunication à couverture multispots et à répartition de capacité variable selon la revendication 5, **caractérisé en ce que** chaque groupe de spots comporte un même nombre moyen de porteuses par spot.

8. Système de télécommunication à couverture multispots et à répartition de capacité variable selon la revendication 5, **caractérisé en ce qu'**il comporte des groupes de spots différents ayant un nombre de spots différent.

9. Procédé de télécommunication par satellite à couverture multispots et à répartition de capacité variable entre au moins une station d'ancrage terrestre (30) et des utilisateurs (32) localisés dans des cellules différentes régulièrement réparties dans une zone de couverture géographique terrestre, le procédé consistant à bord du satellite, à relayer des signaux radiofréquence reçus sur des canaux de réception, entre la station d'ancrage et les utilisateurs, **caractérisé en ce qu'**il consiste à attribuer une même largeur de bande passante DF à chaque canal de réception, à égaliser les niveaux de puissance de tous les canaux de réception, à scinder la bande passante DF attribuée à chaque canal de réception en N sous-bandes de même largeur DP correspondant à N porteuses de fréquences différentes, à sélectionner et à répartir toutes les porteuses obtenues entre tous les spots, deux porteuses adjacentes dans un canal de réception étant attribuées à deux spots différents, et pour chaque spot, à combiner les porteuses sélectionnées correspondantes, le nombre de porteuses attribué à chaque spot étant variable d'un spot à un autre spot en fonction des besoins des utilisateurs (32) correspondants.

10. Procédé de télécommunication par satellite à couverture multispots et à répartition de capacité variable selon la revendication 9, **caractérisé en ce que** le nombre de porteuses attribué à chaque spot est compris entre 0 et N inclus et **en ce que** le nombre moyen de porteuses par spot est prédéfini et inférieur à N.

11. Procédé de télécommunication par satellite à couverture multispots et à répartition de capacité variable selon la revendication 9, **caractérisé en ce qu'**il consiste en outre à associer les spots en plusieurs groupes différents, indépendants entre eux, et à sélectionner et répartir les porteuses dans chaque groupe de spots, indépendamment des autres groupes de spots.

## Patentansprüche

1. Satellitentelekommunikationssystem mit Mehrpunkt-Abdeckung und variabler Kapazitätsverteilung, umfassend wenigstens eine terrestrische Ankerstation (30), Benutzer (32), die sich in unterschiedlichen Zellen befinden, die gleichmäßig in einer terrestrischen geographischen Abdeckzone verteilt sind, wenigstens einen Repeater, der an Bord eines Satelliten montiert ist und Funkfrequenzsignale zwischen der Ankerstation und den Benutzern weiterleiten kann, wobei der Repeater mehrere Empfangskanäle umfasst, die mit wenigstens einer Punkterarbeitungsvorrichtung (361, 362) verbunden sind, wobei alle Empfangskanäle eine identische Passbandbreite haben, wobei jeder Punkt eine dedizierte Benutzerzelle abdecken kann, **dadurch gekennzeichnet, dass** die Punkterarbeitungsvorrichtung (361, 362) Folgendes umfasst: Kanalverstärker (371, 372) mit variablem Verstärkungsfaktor und konstanter Ausgangsleistung, die die Leistungspegel aller Empfangskanäle abgleichen kann, wobei die Ausgangsleistungspegel aller Kanalverstärker konstant und für alle Kanäle identisch sind, Frequenzdemultiplexer (381, 382), die jeweils am Ausgang der Kanalverstärker (371, 372) angeschlossen und dazu bestimmt sind, das jedem Empfangskanal zugeordnete Passband in N Subbänder derselben Breite entsprechend N unterschiedlichen Trägern zu unterteilen, wenigstens eine Vorrichtung (391, 392) zum Auswählen und Verteilen aller Träger zwischen allen Punkten, wobei zwei benachbarte Träger in einem Empfangskanal zwei unterschiedlichen Punkten zugeordnet sind, und Frequenzkombinatoren (401, 402), die jeweils jedem Punkt dediziert sind, um die gewählten Träger für den entsprechenden Punkt zu kombinieren, wobei die Anzahl von jedem Punkt zugeordneten Trägern von einem Punkt zum anderen in Abhängigkeit vom Bedarf der entsprechenden Benutzer (32) variabel ist.

2. Telekommunikationssystem mit Mehrpunkt-Abdeckung und variabler Kapazitätsverteilung nach Anspruch 1, **dadurch gekennzeichnet, dass** die Vorrichtung (391, 392) zum Auswählen und Verteilen von Trägern Schalter mit zwei Positionen und Schalter mit drei Positionen umfasst, wobei die Schalter (411, 412) jeweils je nach ihrer Position jeden Träger mit einem Frequenzkombinator (401, 402) verbinden, der unter allen Frequenzkombinatoren ausgewählt ist.

3. Telekommunikationssystem mit Mehrpunkt-Abdeckung und variabler Kapazitätsverteilung nach Anspruch 1 oder 2, **dadurch gekennzeichnet, dass** es ferner Frequenzwandler (351, 352) umfasst, die jedem Empfangskanal dediziert und zum Umwandeln der Empfangsfrequenzbänder in Sendefrequenzbänder ausgelegt sind, wobei die Kanalverstärker mit variablem Verstärkungsfaktor und konstanter Ausgangsleistung am Ausgang der Frequenzwandler (351, 352) angeschlossen sind.

4. Telekommunikationssystem mit Mehrpunkt-Abdeckung und variabler Kapazitätsverteilung nach Anspruch 1 oder 2, **dadurch gekennzeichnet, dass** jeder Punkt eine Anzahl von dedizierten Trägern zwischen 0 und N einschließlich umfasst, und dadurch, dass die mittlere Trägerzahl pro Punkt vordefiniert und kleiner als N ist.

5. Telekommunikationssystem mit Mehrpunkt-Abdeckung und variabler Kapazitätsverteilung nach Anspruch 1, **dadurch gekennzeichnet, dass** die Punkte zu mehreren unterschiedlichen Gruppen zusammengefasst sind, und dadurch, dass die Punkterarbeitungsvorrichtung mehrere unabhängige Vorrichtungen zum Auswählen und Verteilen von Trägern umfasst, wobei jede Vorrichtung zum Auswählen und Verteilen einer Punktegruppe dediziert ist.

6. Telekommunikationssystem mit Mehrpunkt-Abdeckung und variabler Kapazitätsverteilung nach Anspruch 5, **dadurch gekennzeichnet, dass** die unterschiedlichen Punktegruppen dieselbe Anzahl von Punkten haben.

7. Telekommunikationssystem mit Mehrpunkt-Abdeckung und variabler Kapazitätsverteilung nach Anspruch 5, **dadurch gekennzeichnet, dass** jede Punktegruppe eine selbe mittlere Anzahl von Trägern pro Punkt umfasst.

8. Telekommunikationssystem mit Mehrpunkt-Abdeckung und variabler Kapazitätsverteilung nach Anspruch 5, **dadurch gekennzeichnet, dass** es unterschiedliche Punktegruppen mit einer unterschiedlichen Anzahl von Punkten umfasst.

9. Satellitentelekommunikationsverfahren mit Mehrpunkt-Abdeckung und variabler Kapazitätsverteilung zwischen wenigstens einer terrestrischen Ankerstation (30) und Benutzern (32), die sich in unterschiedlichen Zellen befinden, die gleichmäßig in einer terrestrischen geographischen Abdeckzone verteilt sind, wobei das Verfahren an Bord des Satelliten Folgendes beinhaltet: Weiterleiten der auf den Empfangskanälen empfangenen Funkfrequenzsignale zwischen der Ankerstation und den Benutzern, **dadurch gekennzeichnet, dass** es Folgendes beinhaltet: Zuordnen einer selben Passbandbreite DF zu jedem Empfangskanal, Abgleichen der Leistungspegel aller Empfangskanäle, Unterteilen des jedem Empfangskanal zugeordneten Passbandes DF in N Subbänder derselben Breite DP entsprechend N unterschiedlichen Frequenzträgern, Auswählen und Verteilen aller erhaltenen Träger zwischen allen Punkten, wobei zwei benachbarte Träger in einem Empfangskanal zwei unterschiedlichen Punkten zugeordnet werden, und für jeden Punkt Kombinieren der entsprechenden gewählten Träger, wobei die Anzahl von jedem Punkt zugeordneten Trägern von einem Punkt zum anderen in Abhängigkeit vom Bedarf der entsprechenden Benutzern (32) variabel ist.

10. Satellitentelekommunikationsverfahren mit Mehrpunkt-Abdeckung und variabler Kapazitätsverteilung nach Anspruch 9, **dadurch gekennzeichnet, dass** die Anzahl von jedem Punkt zugeordneten Trägern zwischen 0 und N einschließlich ist, und dadurch, dass die mittlere Anzahl von Trägern pro Punkt vordefiniert und kleiner als N ist.

11. Satellitentelekommunikationsverfahren mit Mehrpunkt-Abdeckung und variabler Kapazitätsverteilung nach Anspruch 9, **dadurch gekennzeichnet, dass** es ferner Folgendes beinhaltet: Zusammenfassen der Punkte zu mehreren unterschiedlichen Gruppen unabhängig voneinander und Auswählen und Verteilen der Träger in jeder Punktegruppe unabhängig von anderen Punktegruppen.

## Claims

1. System for telecommunication via satellite with multispot coverage and variable capacity distribution, comprising at least one terrestrial anchoring station (30), users (32) located in different cells which are regularly distributed in a terrestrial geographical coverage zone, at least one repeater which is mounted on-board a satellite and which is capable of relaying radiofrequency signals between the anchoring station and the users, the repeater comprising a plurality of reception channels which are connected to at least one device for elaborating spots (361, 362), all the receiving channels having an identical pass bandwidth, each spot being capable of covering a dedicated user cell, **characterised in that** the device for elaborating spots (361, 362) comprises channel amplifiers (371, 372) with variable gain and a constant output power which are capable of equalising the power levels of all the reception channels, the output power levels of all the channel amplifiers being constant and identical for all the channels, frequency demultiplexers (381, 382) which are connected respectively at the output of the channel amplifiers (371, 372) and which are intended to split the pass band which is allocated to each reception channel into N sub-bands of the same width corresponding to N different carriers, at least one device (391, 392) for selecting and distributing all the carriers between all the spots, two adjacent carriers in a reception channel being allocated to two different spots, and frequency combiners (401, 402) which are dedicated to each spot, respectively, in order to combine the carriers selected for the corresponding spot, the number of carriers allocated to each spot being variable from one spot to another spot in accordance with the requirements of the corresponding users (32).

2. Telecommunication system with multispot coverage and variable capacity distribution according to claim 1, **characterised in that** the device (391, 392) for selecting and distributing the carriers comprises commutators having two positions and commutators having three positions, the commutators (411, 412) selectively connecting, in accordance with their position, each carrier to a frequency combiner (401, 402) selected from all the frequency combiners.

3. Telecommunication system with multispot coverage and variable capacity distribution according to either claim 1 or claim 2, **characterised in that** it further comprises frequency converters (351, 352) which are dedicated to each reception channel and which are intended to convert reception frequency bands into transmission frequency bands, the channel amplifiers with variable gain and constant output power being connected at the output of the frequency converters (351, 352).

4. Telecommunication system with multispot coverage and variable capacity distribution according to either claim 1 or claim 2, **characterised in that** each spot comprises a dedicated number of carriers between 0 and N inclusive and **in that** the mean number of carriers per spot is predefined and less than N.

5. Telecommunication system with multispot coverage and variable capacity distribution according to claim 1, **characterised in that** the spots are associated as a plurality of different groups, and **in that** the device for elaborating spots comprises a plurality of independent devices for selecting and distributing the carriers, each selection and distribution device being dedicated to a group of spots.

6. Telecommunication system with multispot coverage and variable capacity distribution according to claim 5, **characterised in that** the groups of different spots comprise the same number of spots.

7. Telecommunication system with multispot coverage and variable capacity distribution according to claim 5, **characterised in that** each group of spots comprises the same mean number of carriers per spot.

8. Telecommunication system with multispot coverage and variable capacity distribution according to claim 5, **characterised in that** it comprises different groups of spots which have a different number of spots.

9. Method for telecommunication via satellite with multispot coverage and variable capacity distribution between at least one terrestrial anchoring station (30) and users (32) located in different cells which are regularly distributed in a terrestrial geographical coverage zone, the method involving, on-board the satellite, relaying radiofrequency signals which are received on reception channels, between the anchoring station and the users, **characterised in that** it involves allocating the same pass bandwidth DF to each reception channel, equalizing the power levels of all the reception channels, splitting the pass band DF which is allocated to each reception channel into N sub-bands of the same width DP corresponding to N carriers of different frequencies, selecting and distributing all the carriers obtained between all the spots, two adjacent carriers in a reception channel being allocated to two different spots, and, for each spot, combining the corresponding selected carriers, the number of carriers allocated to each spot being variable from one spot to another spot in accordance with the requirements of the corresponding users (32).

10. Method for telecommunication via satellite with multispot coverage and variable capacity distribution according to claim 9, **characterised in that** the number of carriers allocated to each spot is between O and N inclusive and **in that** the mean number of carriers per spot is predefined and less than N.

11. Method for telecommunication via satellite with multispot coverage and variable capacity distribution according to claim 9, **characterised in that** it further involves associating the spots as a plurality of different groups which are mutually independent and selecting and distributing the carriers in each group of spots, independently of the other groups of spots.
